(19) Europäisches Patentamt
European Patent Office
Office européen des brevets

(11) **EP 2 809 018 B1**

(12) **EUROPEAN PATENT SPECIFICATION**

(45) Date of publication and mention
of the grant of the patent:
**16.08.2017 Bulletin 2017/33**

(51) Int Cl.:
***H04B 10/071*** $^{(2013.01)}$     ***G01M 11/00*** $^{(2006.01)}$

(21) Application number: **13305685.3**

(22) Date of filing: **27.05.2013**

(54) **Method and device for analyzing trace data generated by an optical time domain reflectometer**

Verfahren und Vorrichtung zur Analyse von Trace-Daten durch ein optisches Zeitbereichsreflektometer

Procédé et dispositif pour analyser les données de trace générées par un réflectomètre optique temporel

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.12.2014 Bulletin 2014/49**

(73) Proprietor: **ALCATEL LUCENT**
**92100 Boulogne-Billancourt (FR)**

(72) Inventors:
• **Meersman, Stijn**
**2018 Antwerp (BE)**
• **Dupuis, Nicolas**
**6041 Gosselies (BE)**

(74) Representative: **ALU Antw Patent Attorneys**
**Copernicuslaan 50**
**2018 Antwerpen (BE)**

(56) References cited:
**EP-A1- 2 464 034**

• **CHEN W ET AL: "A Novel Technique for Low-Cost Embedded Non-intrusive Fiber Monitoring of P2MP Optical Access Networks", OPTICAL FIBER COMMUNICATION (OFC 2007) COLLOCATED NATIONAL FIBER OPTIC ENGINEERS CONFERENCE : ANAHEIM, CA, 25 - 29 MARCH 2007, IEEE SERVICE CENTER, PISCATAWAY, NJ, 1 March 2007 (2007-03-01), pages 1-3, XP031146623, ISBN: 978-1-55752-831-5**
• **SCHMUCK H ET AL: "Embedded OTDR techniques for cost-efficient fibre monitoring in optical access networks", PROCEEDINGS / ECOC 2006, 32ND EUROPEAN CONFERENCE ON OPTICAL COMMUNICATION : 24 - 28 SEPTEMBER 2006, CANNES, FRANCE, SEE, PARIS, FRANCE, 24 September 2006 (2006-09-24), pages 1-2, XP031436994, ISBN: 978-2-912328-39-7**

## Description

### Field of the invention

The present invention refers to a method and device for processing trace data generated by an optical time domain reflectometer, said trace data describing a response signal received by the reflectometer from an optical fibre. The invention also refers to a monitoring station comprising such a device and a computer program product comprising a computer program programmed for executing such a method when run on a computer.

### Background

In the recent years, the demand for high-bandwidth services provided over access networks such as IP television (IPTV) and Video-On-Demand has increased. Moreover, network operators have started to introduce Triple-Play services (internet access, television and Voice Over IP telephony) to the market. As a consequence, both the maximum bit rate as well as the availability provided to the subscribers of the network must be increased. In order to monitor or even to improve the quality of service offered by the access network, several tests may be performed on the access network. In particular when applying an optical access network like a Passive Optical Network (PON), an Optical Time Domain Reflectometer (OTDR) may be used in order to check optical transmission lines and to diagnose defects in the line. The OTDR may also be used to locate the defect.

The published patent application EP 2 464 034 A1 discloses a method for reflectometric measurements that takes into account deficiencies of a measuring device.

The most common approach for implementing an OTDR is to install a separate laser dedicated to the OTDR in a central place of the network, such as a central office and to feed an optical test signal generated by the laser into the PON by means of a wavelength division multiplexer. This approach is referred to as "external OTDR". The OTDR is arranged for generating trace data that describe a response signal received by the reflectometer. Typically, the trace data are visualized in the form of a diagram showing signal level over a distance.

Because using the separate laser and the wavelength division multiplexer is costly and occupies space in the central office, it has been proposed to integrate OTDR functions into an optical transceiver module for an Optical Line Termination (OLT) of a PON. The ODTR integrated into the optical transceiver module is often referred to as "embedded ODTR". In existing products, optical transceiver modules with integrated OTDR functionality are available as Small form Factor Pluggable (SFP) transceivers.

However, when implementing an embedded ODTR, certain design compromises must be made due to space restrictions. Small components have to be selected so that the reflectometer can be integrated in the transceiver module. Consequently, trace data generated by embedded ODTR often has a lower quality than trace data generated by an external ODTR.

### Summary

The object of the present invention is to provide a method and device that allow for generating high quality ODTR trace data using an embedded ODTR.

This object is solved by a method according to claim 1 and 8 as well as a device according to claim 6 and 10.

According to an embodiment of the present invention, a method for processing trace data generated by an optical time domain reflectometer is provided, said trace data describing a response signal received by the reflectometer from an optical fibre, the method comprising receiving the trace data; and compensating distortions of the trace by applying a compensation model to the trace data, the compensation model being derived from transmission characteristics (e.g. impulse response, step response or frequency response) of a signal path within the reflectometer.

The inventors have realized that the comparatively low quality of the trace data generated by an embedded ODTR is due to distortions within the signal path within the ODTR. Depending on the concrete type of embedded ODTR under consideration, the signal path may include an analog front end including an optical receiver at a start of the signal path and an analog to digital converter at the end of the signal path. The considered signal path may also include only a part of the front end such as a coupling circuit between the optical receiver and the analog to digital converter. In some considered embedded ODTRs, the coupling circuit may comprise a coupling capacitor arranged between an output of the optical receiver and an input of the analog to digital converter.

The signal path causes distortions to the trace data. Accordingly, the compensation model is provided which reflects the properties of the signal path so that the distortions can be compensated at least to a certain extent. By applying the compensation model to the trace data generated by the embedded ODTR, the quality of the trace data is improved.

In an embodiment, the compensation model is a filter, a frequency response of which models the inverse of a transfer function of the signal path. The transfer function may be determined by measuring. For example a step response or an impulse response at the analog input or the digital output of the analog to digital converter may be measured and the transfer function of the signal path may be determined from the step response or impulse response. This embodiment is particularly suitable to be applied in situations where the distortions caused by the signal path include distortions of the frequency response of the signal path. However, the present invention is not limited to the compensation of the distortions of the frequency response. In another embodiment compensation of other types of distortions, e.g. distortions caused by a non-linearity of the signal path, may also be compensated.

In a preferred embodiment, the method comprises determining a model of the signal path and generating the compensation model by calculating the inverse of the model of the signal path. Although is possible to calculate the compensation model directly from the transfer function of the signal path, it is preferred to find the model of the signal path and then calculate the inverse of the model. This indirect approach avoids errors in the compensation model caused by noise in the measured transfer function.

Preferably, determining the model of the signal path comprises fitting a generic model of the signal path to a transfer function of the signal path. Fitting the generic model may comprise applying regression methods like mean square regression. The generic model may be a parametric model and said fitting may include optimizing the parameters of the model with respect to a target function reflecting an error between the measured transfer function and the modelled transfer function. The model of the signal path may correspond to the generic model with the parameters obtained during the fitting applied.

In an embodiment, the generic model comprises a rational function that describes a transfer function of the signal path. In another embodiment, a different type of function is used. In particular, non-linear model can be applied. In yet another embodiment, the generic model comprises a different calculation rule than a function. The calculation rule may comprise an algorithm with loops and/branches. In general, any type of calculation rule can be applied that can be implemented on a programmable computer of by means of non-programmable digital logic.

In a preferred embodiment, the compensation model describes a low-pass transmission characteristic. The coupling circuit of many embedded OTDR has a high-pass characteristic. Therefore, a compensation model such as a low-pass filter can compensate the distortions. Accordingly, the generic model and the model of the signal path may have a high-pass transmission characteristic. The exact behaviour of the model of the signal path can be determined by the fitting approach described herein. In an exemplary embodiment, the filter may be a first order filter.

According to another embodiment of the present invention a, device for processing trace data generated by an optical time domain reflectometer is provided, said trace data describing a response signal received by the reflectometer from an optical fibre, wherein the device is operable for receiving the trace data; and compensating distortions of the trace by applying a compensation model to the trace data, the compensation model being derived from transmission characteristics of a signal path within the reflectometer.

In an embodiment, the device is operable, preferably programmed for executing a method for processing trace data described herein.

In yet another embodiment of the present invention, a method for determining a compensation model for compensating distortions of a response signal received by an optical time domain reflectometer is provided, the response signal being described by trace data generated by the reflectometer, the method comprising determining a transfer function of a of a signal path within the reflectometer; and generating the compensation model by calculating the inverse of the model of the signal path.

In an embodiment, the compensation model and/or the model of the signal path comprise a mathematical calculation rule, preferably an equation, and/or at least one parameter of said calculation rule or equation.

According to still another embodiment of the invention, a device for determining a compensation model for compensating distortions of a response signal received by an optical time domain reflectometer is provided, the response signal being described by trace data generated by the reflectometer, the device being operable for determining a transfer function of a of a signal path within the reflectometer; and generating the compensation model by calculating the inverse of the model of the signal path.

In an embodiment, the device is arranged, preferably programmed, for executing a herein described method for determining a compensation model.

Accordingly, the invention is not only embodied by a method and device for processing the trace data but also by a method and device that provide the compensation model. The method and device for processing the trace data may apply the model provided by the method or device for determining the compensation model. The model may include a transfer function and the method may use any suitable representation of the transfer function (e.g. coefficients of the transfer function, etc.) for specifying the model. The two methods (and the corresponding devices) constitute therefore interrelated elements that may be applied alone or in combination with each other in order to realize the advantageous effects of the present invention.

According to a further embodiment of the present invention, a monitoring station for processing trace data generated by an optical time domain reflectometer is provided, said trace data describing a response signal received by the reflectometer from an optical fibre, wherein the monitoring station comprises a device described herein.

According to another embodiment of the present invention, a computer program product, preferably a computer readable storage medium, is provided, said computer program product comprising a computer program, wherein the computer program is programmed for executing a method for processing trace data and/or a method for determining a compensation model described herein. The storage medium may include any type of computer accessible memory such as optical memory (e.g. optical disks), magnetic memory (e.g. magnetic disks or tapes) or semiconductor memory (e.g. RAM, ROM, Flash-Memory, etc.). The computer program product may also be provided by a server for transmission over a computer network, e.g. for download over the Internet.

## Brief description of the figures

Exemplary embodiments and further advantages of the present invention are shown in the Figures and described in detail hereinafter.

Figure 1          shows a communication network;
Figure 2          shows a block diagram of an optical transceiver module with an embedded OTDR of the network shown in Figure 1;
Figure 3          shows a block diagram of a method for analyzing trace data generated by the embedded OTDR shown in Figure 2;
Figure 4          shows a flow chart for determining a compensation model applied by the method shown in Figure 3;
Figure 5 - 7      show diagrams of frequency responses; and
Figures 8 - 9     show diagrams of original trace data and compensated trace data.

## Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

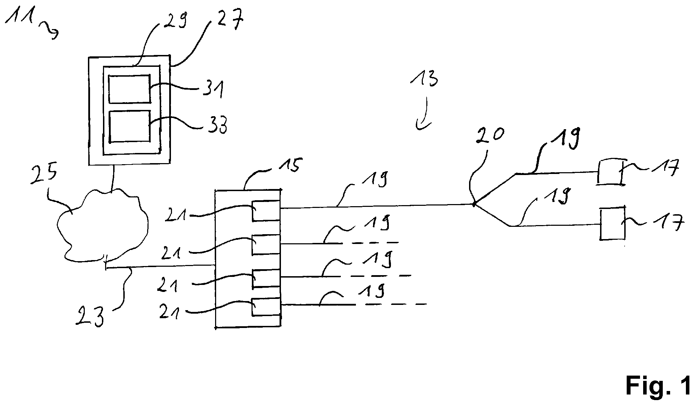

Figure 1 shows a network 11 according to a preferred embodiment. The network 11 comprises an optical access network such as a Passive Optical Network (PON 13). The PON 13 has at least one Optical Line Termination (OLT 15) node and multiple Optical Network Units (ONUs 17). The OLT 15 and the ONUs 17 are interconnected by each other by optical waveguides, in particular optical fibers 19. As shown in Figure 1, at least one fiber 19 may end at an optical splitter 20 to which further fibers 19 are connected, resulting in the fibers 19 of the PON 13 forming a tree-like structure 19, 20 interconnecting a single transceiver module 21 of the OLT 15 with multiple ONUs 17. However, a fiber 19 providing a simple point-to-point connection between a transceiver module 21 and a single ONU 17 can also be implemented. In an embodiment, at least one transceiver module 21 is a Small form Factor Pluggable (SFP) that is installed in the OLT 15.

The OLT 15 may be located in a central office and the ONU 17 may be located close to customers of an operator of the network 11. Depending on the overall organization of the network 11, at least one ONU 17 may be installed directly at the customer's premises (fiber to the home, FTTH). However, the fiber 19 may also be terminated in a building where the customer is located (fiber to the building, FTTB) or in a cabinet near to the building where the customer is located (fiber to the cabinet, FTTC). Accordingly, at least one of the ONUs 17 of the PON 13 may be located in the building or the cabinet, respectively. The OLT 15 is connected via a backhaul link 23 to a core network 25 of the network 11, which may be in turn connected to a wide area network such as the Internet (not shown).

Moreover, the network 11 comprises at least one monitoring station 27. The monitoring stations 27 can communicate with the at least one OLT 15. For example, the monitoring station 27 may be connected to the core network 25. In an embodiment, the monitoring station 27 is co-located with the OLT 15 in the central office. However, in the embodiment shown in Figure 1, the monitoring station 27 is located at a different place than the OLT 15.

As shown in Figure 1, the monitoring station 27 comprises a computer 29 including a processor 31 and a storage element 33. The storage element 33 may comprise magnetic memory (e.g. magnetic disk or tape), optical memory (e.g. optical disk) and/or semiconductor memory (RAM, ROM, Flash Memory, etc.). In an embodiment, the computer 29 is designed according to the Personal Computer (PC) architecture. Preferably, the computer 29 may be a PC-based server or the like. On the storage element 33, a computer program may be stored that is programmed for executing a method described herein when run on the computer 29.

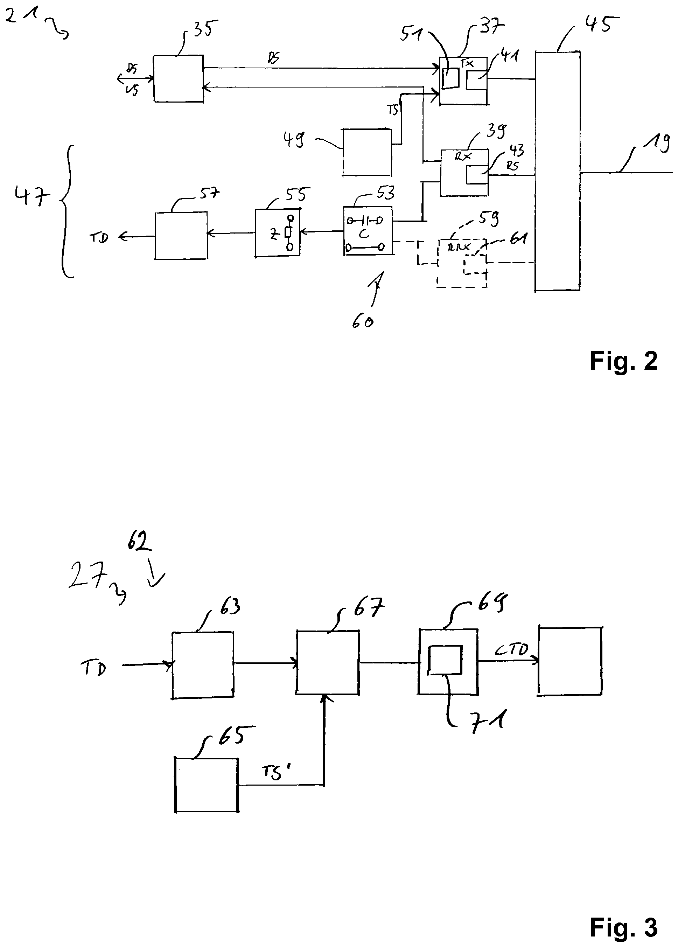

Figure 2, shows the structure of the transceiver modules 21 in more detail. The transceiver module 21 has transmit and receive signal processing circuitry 35. The circuitry 35 is coupled to the other parts of the OLT 15 so that a upstream signal carrying upstream data US received from the fiber 19 connected to the transceiver module 21 is forwarded to the other parts of the OLT 15 and that a downstream signal carrying downstream data DS to be transmitted over this fiber 19 is can be received from the other parts of the OLT.

Moreover, the transceiver module 21 comprises transmit circuitry 37 having a light source like a laser diode 41 arranged for emitting an optical signal depending on an electrical signal generated by the transmit circuitry 27, which electrical signal carries the downstream data DS. The transceiver module 21 comprises also receive circuitry 39 having a photo detector, such as a photodiode 43 arranged for converting a received optical signal in an electrical signal carrying the upstream data US. Both the laser diode 41 and the photodiode 43 are coupled to the fiber 19 by means of an optical coupler 45 so that the fiber 19 is used for both downstream and upstream transmissions. In another embodiment, different fibers are used for downstream and upstream transmissions; in this embodiment, the optical coupler 45 is not needed.

The transceiver module 21 comprises an embedded Optical Time Domain Reflectometer (ODTR), i.e. additional parts that allow performing optical time domain reflectometry without using optical components external with respect to the transceiver module 21. The embedded ODTR 47 include a signal generator 49 for generating a test signal TS. In the shown exemplary embodiment, the test signal TS is a Pseudo Random Binary Sequence (PRBS) and the test signal generator 49 is arranged for generating the PRBS. An output of the test signal generator 49 is connected to an input of a modulator 51 of the transmit circuitry 37 so that the optical signal to be transmitted can be modulated with the test signal TS.

The receive circuitry 39 is coupled with the signal processing circuitry 35 and via a coupling circuit 53 of the embedded ODTR 47 to an input of an analog to digital converter (ADC 55) of the embedded ODTR 47. As show in Figure 1, the coupling circuit 53 may comprise a coupling capacitor C. In an exemplary embodiment, the coupling capacitor C is connected between an output of the receive circuitry 39 and the input of the ADC 55. An output of the ADC 55 is connected to an input of a first preprocessing stage 57 of the embedded OTDR 47.

In one embodiment of the transceiver module 21, a single receive circuitry 39 and a single photodiode 43 is applied. In another embodiment, the transceiver module 21 comprises a further receive circuitry 59 including a further photo detector, like a further photodiode 61. The further receive circuitry 49 is connected via the coupling circuit 53 to the ADC 55, whereas the receive circuitry 39 is connected to the data signal processing circuitry 35.

When operating the network 11, the OLT 15 receives downstream data DS coming e.g. from the core network 25 and forwards the downstream data to the signal processing circuitry 35. The signal processing circuitry 35 generates a downstream electrical signal that is forwarded to the transmit circuitry 37. The modulator 51 modulates the downstream electrical signal with the test sequence TS. The laser 41 converts the modulated electrical signal to a downstream optical signal, which is coupled into the fiber 19 by the optical coupler 45. In addition, the optical coupler 45 forwards an optical upstream signal to the photodiode 43 and the photodiode 43 converts it into a corresponding uplink electrical signal that is processed, in particular amplified, by the receive circuitry 39.

The electrical uplink signal not only comprises upstream data US but also a response signal RS to the test signal TS. The electrical uplink signal is inputted into the signal processing circuitry 35, which extract the upstream data US from the upstream signal and forwards the upstream data US to the other parts of the OLT 15. The OLT 15 may then transmit the upstream data to the core network 25. The ADC 55 receives the electrical optical signal comprising the response signal RS from the receive circuitry 39 via the coupling circuit 53, e.g. the coupling capacitor C.

An input impedance Z of the ADC 55 and the coupling capacitor C form a first order high pass filter. Because the embedded ODTR 47 must fit together with the other parts of the transceiver module 21 into a defined space available within the OLT, the possible size of the capacitor C is limited. When implemented as a SFP, the transceiver module 21 must fit into the case of the SFP. As a consequence, the capacity of the capacitor C is comparatively small resulting in such a low cutoff frequency that an analog signal fed into the ADC 55 is considerably distorted, i.e. the lower frequencies of the analog signal are attenuated. In other words, the coupling circuit 53, e.g. the coupling capacitor C, is part of a signal path 60 within the embedded ODTR 47 that distorts a signal comprising the response signal RS.

The ADC 55 converts the uplink electrical signal into a digital trace signal. The first preprocessing stage 57 may be operable for filtering digital trace signal. Furthermore, the first preprocessing stage generates digital trace data TD from the digital trace signal. In an embodiment, generating the digital trace data TD includes averaging the digital trace signal related to multiple time intervals for increasing the accuracy of the trace data.

The digital trace data TD is then transmitted e.g. over the core network 25 to the monitoring station 27. The computer 29 of the monitoring station 27 is programmed for executing additional data processing steps for processing the trace data TD.

An exemplary signal processing chain for processing the trace data TD within the monitoring station 29 is shown in Figure 3. The signal processing chain defines a method 62 for processing the trace data TD generated by the embedded OTDR 47 and received from the embedded OTDR 47 via the other parts of the transceiver module 21 and the OLT 15 and via the core network 25 or any other interconnection arrangement that interconnects the OLT 15 and the monitoring station 27 with each other.

An optional second preprocessing stage 63 of the monitoring station 27 receives the trace data TD from the transceiver module 21. Similarly to the first preprocessing stage 57, the second preprocessing stage 63 may be arranged for filtering and/or averaging the trace data. Depending on the concrete embodiment, preprocessing functions (e.g. filtering the trace data TD or averaging the trace data TD) may be placed either in the first preprocessing stage 57 or the second preprocessing stage 63. In extreme case one preprocessing stage 57, 63 may be completely omitted and all preprocessing functions are performed by the other preprocessing stage 63, 57.

A further test signal generator 65 of the monitoring station 27 is operable to generate a further test signal TS' that corresponds to the test signal TS generated by the test signal generator 49 of the transceiver module 21. In the shown embodiment, the further test signal generator 65 generates the same PRBS as the test signal generator 49. To this end, the two test signal generators 49, 65 may be coordinated and/or synchronized with respect to each other.

A correlator 67 correlates the preprocessed trace data with the further test signal TS' and outputs a correlated trace data that correspond to the response signal RS, i.e. the response the test signal TS modulated on the downstream signal by the modulator 51 Instead of using the PRBS as described herein, other well-known approaches for performing the optical time domain reflectometry may be used. For example, the single pulse method or the swept sine wave technique may be applied.

The correlated trace data TD generated by the correlator 67, are processed by post processing stage 69 of the monitoring node. The post processing stage 69 comprises a block 71 that applies an inverse model IFM derived from transmission characteristics of the signal path 60, e.g. the coupling circuit 53, within the transceiver module 21, in particular within the embedded OTDR 47. Applying the inverse model IFM has the effect that the distortion of the response signal RS caused by the signal path 60 is at least partially compensated. The inverse model IFM may be obtained by determining a model FM of the signal path 60 and by inverting the model. For example, both the model FM of the signal path 60 as well as the inverse model IFM may be described by transfer functions. The transfer functions may be represented analytically (i.e. using an equation) or by way of a set of numerical samples of the transfer functions. Moreover, in a preferred embodiment, the model of the signal path is a generic analytical model and determining model of the signal path includes fitting the generic analytical model to transfer function data. The generic model may be a parametric model and the fitting may include calculating the parameters of the parametric model. Regardless on which representation is applied, calculating the inverse IFM of the model FM may be accomplished by inverting the transfer function of the signal path 60.

In the shown embodiment, the step of applying the inverse model IFM is performed in the post processing stage 69. However, the step of applying the inverse model IFM may also be included at any other position within the signal processing chain shown in Figure 3. In another embodiment, the step of applying the inverse model IFM is located within the signal processing chain before the correlator 67, e.g. before or after the preprocessing stage 63. Moreover, the step of applying the inverse model IFM may be included into the second preprocessing stage 63.

The transfer function data may be determined e.g. by measurement. In the shown embodiment, the signal path includes the coupling circuit 53. Accordingly, transfer function of the coupling circuit 53 data may be determined by measuring the transmission characteristics of the coupling circuit. The transfer function may be measured e.g. during or just after manufacturing of the transceiver module 21. A simple measurement approach is to connect a rather short open fiber to the transceiver module 21 and operate the embedded OTDR 47. The test signal TS emitted by the transmitter 37 into the fiber is reflected at the open end of the fiber. The reflected signal corresponds to a known response signal RS that is used to determine the step response or impulse response of the signal path 60. The frequency response of the signal path 60 may be calculated from the measured step response or impulse response. The frequency response may be stored on a server to be retrieved by the operations of block 71. The server may be implemented on the monitoring station 27 or on a different node that can communicate with the monitoring station 27.

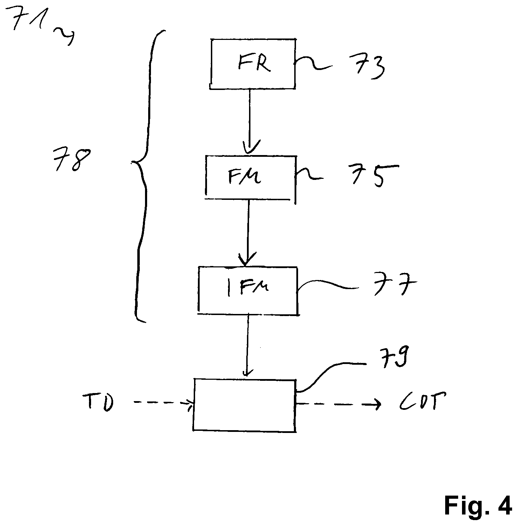

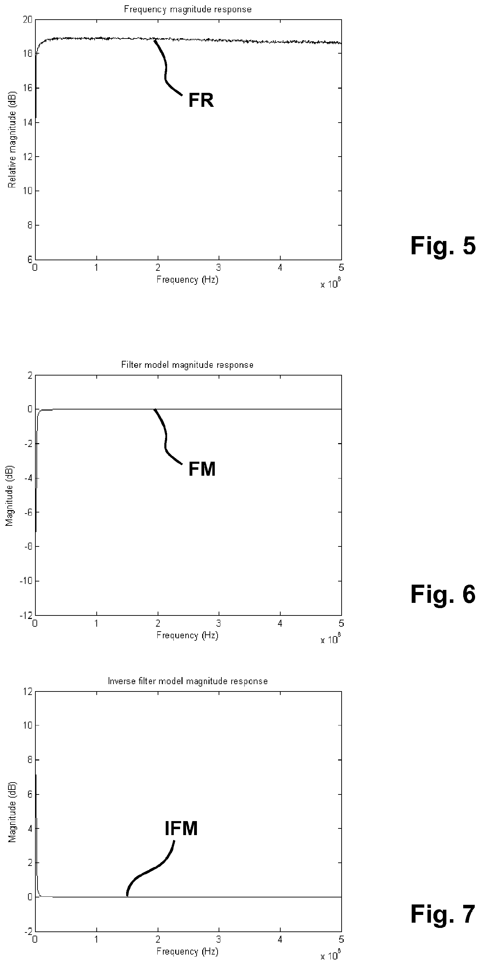

Figure 4 shows operations that may be performed in block 71. Block 71 comprises a qualification step 73. Step 73 may include retrieving, e.g. from the server, the non-ideal frequency response which cause the distortions to the response signal RS. In an embodiment, the frequency response is retrieved by measuring the step response or the impulse response at a boundary of the analog front end, i.e. at the ADC 55. In an embodiment the input signal Ra of the ADC 55 is measured. In another embodiment, the digitalized response signal RS is retrieved from the output of the ADC 55. Then the distortion caused by the front end, in particular the coupling circuit 53, is estimated from the measured step response or impulse response. The distortion may be described by way of a frequency response of the signal path 60. Figure 5 shows a diagram of an exemplary frequency response FR of the signal path. It can be seen that the signal path has a high-pass characteristic resulting from the coupling capacitor C of the coupling circuit 53.

Block 71 comprises a modeling step 75 for determining a model FM of the signal path 60. The model FM is determined from the characteristics measured in step 73, e.g. from the frequency response determined in step 73. In an embodiment, the signal path is modeled as a filter characterized by its frequency response. The frequency response of an $N^{th}$ order filer can be described by an $N^{th}$ order rational function

$$H_{est}(f) = \frac{w_0 + w_1 f + w_2 f^2 + \cdots + w_N f^N}{z_0 + z_1 f + z_2 f^2 + \cdots + z_n f^N} \tag{1}$$

where $w = [w_0, w_1, \ldots, w_n]$ and $z = [Z_1, Z_2, \ldots, Z_N]$ are coefficients of the above frequency response that have to be found using such that the above equation is fitted to the frequency response determined in step 73. The function $H_{est}(f)$ constitutes a parametric generic model of the signal path 60. By determining the coefficients, the concrete model FM of the signal path 60 may be obtained.

In a preferred embodiment, the modeling step 75 uses a least square regression. The model of equation (1) can be fitted to the data determined in step 73 by minimizing the least mean square error $e$ between the measured frequency response and the estimated frequency response $H_{est}(f)$:

$$e = \sqrt{\sum_f |H_{measured}(f) - H_{est}(f, \boldsymbol{w}, \boldsymbol{z})|^2} \rightarrow \min e \tag{2}$$

To find the optimum value of the least mean square error $e$ and the corresponding weight vectors w and z, any optimization techniques that minimize the remaining error $e$ can be used, for instance performing a (pseudo) inverse computation (polynomial regression) or a Lagrangian approach, e.g. Gradient Descent. The present invention is not limited to the polynomial model of equation (1). In other embodiments, different types of models are applied; in particular non-linear models may also be used.

In general, the choice of the model of the signal path depends on the overall structure of the OTDR 47, in particular on the structure of the considered signal path 60 within the OTDR 47. In the exemplary transceiver module 21 shown in Figure 2, the distortions of the response signal RS are caused mainly by the coupling circuit 53. Therefore, the impact of other circuits of the ODTR 47 is neglected. Moreover, the shown coupling circuit 53 consists only of the coupling capacitor C connected between an output of the receive circuitry 39 and an input of the ADC 55. In this example, the coupling capacitor C is the root cause of the distortions. Due to space restrictions - the transceiver module 21 should fit into the case of a SFP - the coupling capacitor has a quite low capacitance resulting in a rather high attenuation of lower frequencies of the response signal RS, as can be seen on Figure 5.

In this embodiment, the signal path can be modeled as a first order high pass filter having the cut-off frequency given below.

$$f_c = \frac{1}{2\pi\tau} = \frac{1}{2\pi RC} \tag{3}$$

It is assumed that the input impedance Z of the ADC 55 is real-valued, $Z = R \epsilon \mathbb{R}$. Consequently, the model of equation (1) can be applied with N=1.

Using the fitting approach, e.g. the mean square regression, the cut-off frequency $f_c$ can be reliably estimated based on the measured transfer function $H_{measured}$. In other words, the value of the cut-off frequency parameter $f_c$ that minimizes the mean square error e between the measured transfer function $H_{measured}$ and the transfer function $H_{est}$ estimated according to the model. A plot of the estimated transfer function is shown in Figure 6. The estimated transfer function constitutes the model FM of the signal path 60, whereas the transfer function shown in Figure 5 describes the measured frequency response FR of the signal path 60. In contrast to the model FM, the measured frequency response FR comprises noise or other artifacts caused by disturbances or imperfectness of the measurement process.

In one embodiment, step 75 determines the model for a certain type of transceiver module 21. However, some types of transceiver modules 21 may have a signal path, transmission characteristics of which heavily vary between the individual transceiver modules 21 of the same type. The variations of the transmission characteristics may be a result of a quite large manufacturing tolerance of the capacitance of the coupling capacitor C. In another embodiment, step 75 therefore determines the model for each individual transceiver module 21 separately.

After step 75 has determined the model FM of the signal path 60, e.g. by calculating the weights w, z, an inverting step 77 of block 71 is executed. The inverting step 77 calculates the inverse IFM of the model determined in step 75. Calculating the inverse of the model may comprise inverting the (fitted) transfer function determined in step 75. The result of step 77 includes an inverse filter model. In the shown embodiment, the inverted transfer function shown in Figure 7 constitutes the inverse model IFM.

Steps 73, 75 and 77 constitute a method 78 for determining the inverse model IFM. The method 71 may be executed independently from the other operations described herein, in particular independently from the method 62 for processing the trace data TD. For instance, the method 71 may determine the inverse model IFM once for each transceiver module 21 monitored by the monitoring station 27. The method 62 may then use the result (i.e. the inverse model IFM or a suitable representation thereof) to process the trace data TD. A suitable representation of the model IFM may comprise e.g. the set of parameters of the inverse model IFM.

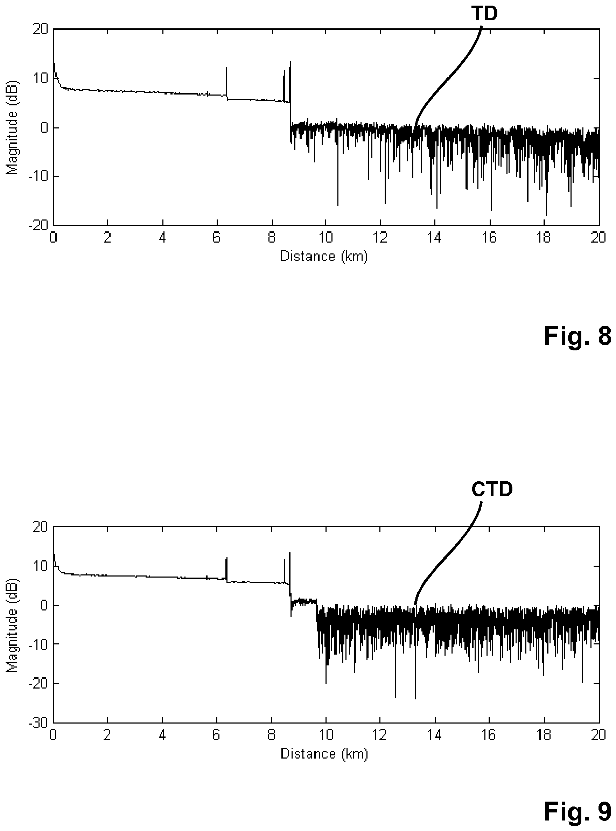

A further step 79 of block 71 applies the inverse model calculated in step 77 to the trace data TD. By applying the inverse model, compensated trace data CDT are obtained. Therefore, the inverse model IFM is herein also referred to as "compensation model". The trace data TD describes an OTDR trace that is distorted whereas the compensated trace data CDT describe the ODTR trace with the distortions at least partially removed. The effect of the removal of the distortions from the trace data TD is illustrated in Figures 8 and 9. Figure 8 shows a trace plotted using the trace data TD. Figure 9 shows the same trace plotted using the compensated trace data CTD. It can be seen that a step of the trace at about 9.8 km is not visible in Figure 8 but can be easily observed in Figure 9. The step visible only in Figure 9 is a sign of a fiber end after the optical splitter 20 of the PON 13.

To sum up, the method and devices described herein compensate distortions in OTDR traces caused by a signal path within the embedded OTDR 47. The distortions are caused by design compromises due to space restrictions in the transceiver module 21. Thus, the method and devices described herein allow for generating high quality OTDR traces using a compact embedded ODTR 47.

## Claims

1.  Method (62) for processing trace data (TD) generated by an optical time domain reflectometer (47), said trace data (TD) describing a response signal (RS) received by the reflectometer (47) from an optical fibre (19), the method comprising

    - receiving the trace data (TD); and
    - compensating (69, 79) distortions of the trace by applying a compensation model (71) to the trace data (TD), the compensation model (IFM) being derived from transmission characteristics of a signal path (60) within the reflectometer (47);

    **characterized in that** the method (62) comprises

    - determining (75) a model (FM) of the signal path (60) and generating the compensation model (IFM) by calculating the inverse of the model (FM) of the signal path (60), wherein determining (75) the model (FM) of the signal path (60) comprises fitting a generic model of the signal path to a measured transfer function (FR) of the signal path (60).

2.  Method (62) according to claim 1, wherein the signal path (60) includes a connection circuit (53) that connects an optical receiver (59) of the reflectometer (47) to an analog to digital converter (55) of the reflectometer (47).

3.  Method (62) according to claim 1 or 2, wherein the compensation model (IFM) is a filter, a frequency response of which models the inverse of a transfer function (FM) of the signal path (60).

4.  Method (62) according to one of the precedent claims, wherein the generic model comprises a rational function that describes a transfer function (FM) of the signal path (60).

5.  Method (62) according to one of the precedent claims, wherein the compensation model (IFM) describes a low-pass transmission characteristic.

6.  Device (29) for processing trace data (TD) generated by an optical time domain reflectometer (47), said trace data (TD) describing a response signal (RS) received by the reflectometer (47) from an optical fibre (19), wherein the device (29) is operable for

    - receiving the trace data (TD); and
    - compensating (69, 79) distortions of the trace by applying a compensation model (71) to the trace data (TD), the compensation model (IFM) being derived from transmission characteristics of a signal path (60) within the reflectometer (47);

**characterized in that** the device (29) is operable for

- determining (75) a model (FM) of the signal path (60) and generating the compensation model (IFM) by calculating the inverse of the model (FM) of the signal path (60), wherein determining (75) the model (FM) of the signal path (60) comprises fitting a generic model of the signal path to a measured transfer function (FR) of the signal path (60).

7. Device (29) according to claim 6, wherein the device is operable, preferably programmed, for executing a method according to one of claims 1 to 5.

8. Method (78) for determining a compensation model (IFM) for compensating distortions of a response signal (RS) received by an optical time domain reflectometer (47), the response signal (RS) being described by trace data (TD) generated by the reflectometer (47), the method (78) comprising

- determining (73) a transfer function of a of a signal path (60) within the reflectometer (47); and
- generating the compensation model (71) by calculating (77) the inverse of the model of the signal path;

**characterized in that** the method (62) comprises

- determining (75) a model (FM) of the signal path (60) and generating the compensation model (IFM) by calculating the inverse of the model (FM) of the signal path (60), wherein determining (75) the model (FM) of the signal path (60) comprises fitting a generic model of the signal path to a measured transfer function (FR) of the signal path (60).

9. Method (78) according to claim 8, wherein the compensation model (IFM) and/or the model (FM) of the signal path (60) comprise a mathematical calculation rule, preferably an equation.

10. Device (29) for determining a compensation model (IFM) for compensating distortions of a response signal (RS) received by an optical time domain reflectometer (47), the response signal (RS) being described by trace data (TD) generated by the reflectometer (47), the device (29) being operable for

- determining (73) a transfer function of a of a signal path (60) within the reflectometer (47); and
- generating the compensation model (71) by calculating (77) the inverse of the model of the signal path (60);

**characterized in that** the device (29) is operable for

- determining (75) a model (FM) of the signal path (60) and generating the compensation model (IFM) by calculating the inverse of the model (FM) of the signal path (60), wherein determining (75) the model (FM) of the signal path (60) comprises fitting a generic model of the signal path to a measured transfer function (FR) of the signal path (60).

11. Device (29) according to 10, wherein the device (29) is arranged, preferably programmed, for executing a method (71) according to claim 8 or 9.

12. Monitoring station (27) for processing trace data (TD) generated by an optical time domain reflectometer (47), said trace data (TD) describing a response signal (RS) received by the reflectometer (47) from an optical fibre (19), wherein the monitoring station comprises a device (29) according to one of claims 6, 7, 10 or 11.

13. Computer program product, preferably a computer readable storage medium (33), comprising a computer program, wherein the computer program is programmed for executing a method according to one of claims 1 to 5, 8 or 9 when run on a computer (29).

**Patentansprüche**

1. Verfahren (62) zur Verarbeitung von Trace-Daten (TD), die von einem optischen Zeitbereichsreflektometer (47) erzeugt werden, wobei die besagten Trace-Daten (TD) ein Antwortsignal (RS) beschreiben, das von dem Reflektometer (47) aus einem Lichtwellenleiter (19) empfangen wird, wobei das Verfahren Folgendes umfasst:

- Empfangen der Trace-Daten (TD); und
- Kompensieren (69, 79) von Verzerrungen des Trace durch Anwenden eines Kompensationsmodells (71) auf die Trace-Daten (TD), wobei das Kompensationsmodell (IFM) von Übertragungsmerkmalen eines Signalpfads (60) innerhalb des Reflektometers (47) abgeleitet wird;

**dadurch gekennzeichnet, dass** das Verfahren (62) Folgendes umfasst:

- Bestimmen (75) eines Modells (FM) des Signalpfads (60) und Erzeugen des Kompensationsmodells (IFM) durch Berechnen der Umkehrfunktion des Modells (FM) des Signalpfads (60), wobei das Bestimmen (75) des Modells (FM) des Signalpfads (60) das Anpassen eines generischen Modells des Signalpfads an eine gemessene Übertragungsfunktion (FR) des Signalpfads (60) umfasst.

2. Verfahren (62) nach Anspruch 1, wobei der Signalpfad (60) eine Verbindungsschaltung (53) umfasst, die einen optischen Empfänger (59) des Reflektometers (47) mit einem Analog-Digital-Wandler (55) des Reflektometers (47) verbindet.

3. Verfahren (62) nach Anspruch 1 oder 2, wobei das Kompensationsmodell (IFM) ein Filter ist, von dem ein Frequenzgang die Umkehrfunktion einer Übertragungsfunktion (FM) des Signalpfads (60) modelliert.

4. Verfahren (62) nach einem der vorstehenden Ansprüche, wobei das generische Modell eine rationale Funktion umfasst, die eine Übertragungsfunktion (FM) des Signalpfads (60) beschreibt.

5. Verfahren (62) nach einem der vorstehenden Ansprüche, wobei das Kompensationsmodell (IFM) ein Tiefpass-Übertragungsmerkmal beschreibt.

6. Vorrichtung (29) zur Verarbeitung von Trace-Daten (TD), die von einem optischen Zeitbereichsreflektometer (47) erzeugt werden, wobei die besagten Trace-Daten (TD) ein Antwortsignal (RS) beschreiben, das von dem Reflektometer (47) aus einem Lichtwellenleiter (19) empfangen wird, wobei die Vorrichtung (29) betriebsfähig ist zum

- Empfangen der Trace-Daten (TD); und
- Kompensieren (69, 79) von Verzerrungen des Trace durch Anwenden eines Kompensationsmodells (71) auf die Trace-Daten (TD), wobei das Kompensationsmodell (IFM) von Übertragungsmerkmalen eines Signalpfads (60) innerhalb des Reflektometers (47) abgeleitet wird;

**dadurch gekennzeichnet, dass** die Vorrichtung (29) betriebsfähig ist zum

- Bestimmen (75) eines Modells (FM) des Signalpfads (60) und Erzeugen des Kompensationsmodells (IFM) durch Berechnen der Umkehrfunktion des Modells (FM) des Signalpfads (60), wobei das Bestimmen (75) des Modells (FM) des Signalpfads (60) das Anpassen eines generischen Modells des Signalpfads an eine gemessene Übertragungsfunktion (FR) des Signalpfads (60) umfasst.

7. Vorrichtung (29) nach Anspruch 6, wobei die Vorrichtung betriebsfähig, vorzugweise programmiert, ist zum Ausführen eines Verfahrens nach einem der Ansprüche 1 bis 5.

8. Verfahren (78) zum Bestimmen eines Kompensationsmodells (IFM) zum Kompensieren von Verzerrungen eines Antwortsignals (RS), das von einem optischen Zeitbereichsreflektometer (47) empfangen wird, wobei das Antwortsignal (RS) von Trace-Daten (TD) beschrieben wird, die von dem Reflektometer (47) erzeugt werden, wobei das Verfahren (78) Folgendes umfasst:

- Bestimmen (73) einer Übertragungsfunktion eines Signalpfads (60) innerhalb des Reflektometers (47); und
- Erzeugen des Kompensationsmodells (71) durch Berechnen (77) der Umkehrfunktion des Modells des Signalpfads;

**dadurch gekennzeichnet, dass** das Verfahren (62) Folgendes umfasst:

- Bestimmen (75) eines Modells (FM) des Signalpfads (60) und Erzeugen des Kompensationsmodells (IFM) durch Berechnen der Umkehrfunktion des Modells (FM) des Signalpfads (60), wobei das Bestimmen (75) des Modells (FM) des Signalpfads (60) das Anpassen eines generischen Modells des Signalpfads an eine gemessene Übertragungsfunktion (FR) des Signalpfads (60) umfasst.

9. Verfahren (78) nach Anspruch 8, wobei das Kompensationsmodell (IFM) und/oder das Modell (FM) des Signalpfads (60) eine mathematische Rechenregel, vorzugsweise eine Gleichung, umfasst.

10. Vorrichtung (29) zur Bestimmung eines Kompensationsmodells (IFM) zum Kompensieren von Verzerrungen eines Antwortsignals (RS), das von einem optischen Zeitbereichsreflektometer (47) empfangen wird, wobei das Antwortsignal (RS) von Trace-Daten (TD) beschrieben wird, die von dem Reflektometer (47) erzeugt werden, wobei die Vorrichtung (29) betriebsfähig ist zum

   - Bestimmen (73) einer Übertragungsfunktion eines Signalpfads (60) innerhalb des Reflektometers (47); und
   - Erzeugen des Kompensationsmodells (71) durch Berechnen (77) der Umkehrfunktion des Modells des Signalpfads (60);

   **dadurch gekennzeichnet, dass** die Vorrichtung (29) betriebsfähig ist zum

   - Bestimmen (75) eines Modells (FM) des Signalpfads (60) und Erzeugen des Kompensationsmodells (IFM) durch Berechnen der Umkehrfunktion des Modells (FM) des Signalpfads (60), wobei das Bestimmen (75) des Modells (FM) des Signalpfads (60) das Anpassen eines generischen Modells des Signalpfads an eine gemessene Übertragungsfunktion (FR) des Signalpfads (60) umfasst.

11. Vorrichtung (29) nach Anspruch 10, wobei die Vorrichtung (29) betriebsfähig, vorzugweise programmiert, ist zum Ausführen eines Verfahrens (71) nach Anspruch 8 oder 9.

12. Überwachungsstation (27) zur Verarbeitung von Trace-Daten (TD), die von einem optischen Zeitbereichsreflektometer (47) erzeugt werden, wobei die besagten Trace-Daten (TD) ein Antwortsignal (RS) beschreiben, das von dem Reflektometer (47) aus einem Lichtwellenleiter (19) empfangen wird, wobei die Überwachungsstation eine Vorrichtung (29) nach einem der Ansprüche 6, 7, 10 oder 11 umfasst.

13. Computerprogrammprodukt, vorzugsweise ein computerlesbares Speichermedium (33), umfassend ein Computerprogramm, wobei das Computerprogramm programmiert ist zum Ausführen eines Verfahrens nach einem der Ansprüche 1 bis 5, 8 oder 9, wenn es auf einem Computer (29) gestartet wird.

**Revendications**

1. Procédé (62) pour traiter des données de trace (TD) générées par un réflectomètre de domaine temporel optique (47), lesdites données de trace (TD) décrivant un signal de réponse (RS) reçu par le réflectomètre (47) en provenance d'une fibre optique (19), le procédé comprenant les étapes suivantes

   - recevoir les données de trace (TD) ; et
   - compenser (69, 79) des distorsions de la trace en appliquant un modèle de compensation (71) aux données de trace (TD), le modèle de compensation (IFM) étant dérivé de caractéristiques de transmission d'un trajet de signal (60) à l'intérieur du réflectomètre (47) ;

   **caractérisé en ce que** le procédé (62) comprend l'étape suivante

   - déterminer (75) un modèle (FM) du trajet de signal (60) et générer le modèle de compensation (IFM) en calculant l'inverse du modèle (FM) du trajet de signal (60), la détermination (75) du modèle (FM) du trajet de signal (60) comprenant l'ajustement d'un modèle générique du trajet de signal à une fonction de transfert mesurée (FR) du trajet de signal (60).

2. Procédé (62) selon la revendication 1, dans lequel le trajet de signal (60) inclut un circuit de connexion (53) qui connecte un récepteur optique (59) du réflectomètre (47) à un convertisseur analogique-numérique (55) du réflectomètre (47).

3. Procédé (62) selon la revendication 1 ou 2, dans lequel le modèle de compensation (IFM) est un filtre, dont une réponse en fréquence modélise l'inverse d'une fonction de transfert (FM) du trajet de signal (60).

**4.** Procédé (62) selon l'une des revendications précédentes, dans lequel le modèle générique comprend une fonction rationnelle qui décrit une fonction de transfert (FM) du trajet de signal (60).

**5.** Procédé (62) selon l'une des revendications précédentes, dans lequel le modèle de compensation (IFM) décrit une caractéristique de transmission passe-bas.

**6.** Dispositif (29) pour traiter des données de trace (TD) générées par un réflectomètre de domaine temporel optique (47), lesdites données de trace (TD) décrivant un signal de réponse (RS) reçu par le réflectomètre (47) en provenance d'une fibre optique (19), le dispositif (29) étant exploitable pour

- recevoir les données de trace (TD) ; et
- compenser (69, 79) des distorsions de la trace en appliquant un modèle de compensation (71) aux données de trace (TD), le modèle de compensation (IFM) étant dérivé des caractéristiques de transmission d'un trajet de signal (60) à l'intérieur du réflectomètre (47) ;

**caractérisé en ce que** le dispositif (29) est exploitable pour

- déterminer (75) un modèle (FM) du trajet de signal (60) et générer le modèle de compensation (IFM) en calculant l'inverse du modèle (FM) du trajet de signal (60), la détermination (75) du modèle (FM) du trajet de signal (60) comprenant l'ajustement d'un modèle générique du trajet de signal à une fonction de transfert mesurée (FR) du trajet de signal (60).

**7.** Dispositif (29) selon la revendication 6, le dispositif étant exploitable, de préférence programmé, pour exécuter un procédé selon l'une des revendications 1 à 5.

**8.** Procédé (78) pour déterminer un modèle de compensation (IFM) pour compenser des distorsions d'un signal de réponse (RS) reçu par un réflectomètre de domaine temporel optique (47), le signal de réponse (RS) étant décrit par des données de trace (TD) générées par le réflectomètre (47), le procédé (78) comprenant les étapes suivantes

- déterminer (73) une fonction de transfert d'un trajet de signal (60) à l'intérieur du réflectomètre (47) ; et
- générer le modèle de compensation (71) en calculant (77) l'inverse du modèle du trajet de signal ;

**caractérisé en ce que** le procédé (62) comprend l'étape suivante

- déterminer (75) un modèle (FM) du trajet de signal (60) et générer le modèle de compensation (IFM) en calculant l'inverse du modèle (FM) du trajet de signal (60), la détermination (75) du modèle (FM) du trajet de signal (60) comprenant l'ajustement d'un modèle générique du trajet de signal à une fonction de transfert mesurée (FR) du trajet de signal (60).

**9.** Procédé (78) selon la revendication 8, dans lequel le modèle de compensation (IFM) et/ou le modèle (FM) du trajet de signal (60) comprennent une règle de calcul mathématique, de préférence une équation.

**10.** Dispositif (29) pour déterminer un modèle de compensation (IFM) pour compenser des distorsions d'un signal de réponse (RS) reçu par un réflectomètre de domaine temporel optique (47), le signal de réponse (RS) étant décrit par des données de trace (TD) générées par le réflectomètre (47), le dispositif (29) étant exploitable pour

- déterminer (73) une fonction de transfert d'un trajet de signal (60) à l'intérieur du réflectomètre (47) ; et
- générer le modèle de compensation (71) en calculant (77) l'inverse du modèle du trajet de signal (60) ;

**caractérisé en ce que** le dispositif (29) est exploitable pour

- déterminer (75) un modèle (FM) du trajet de signal (60) et générer le modèle de compensation (IFM) en calculant l'inverse du modèle (FM) du trajet de signal (60), la détermination (75) du modèle (FM) du trajet de signal (60) comprenant l'ajustement d'un modèle générique du trajet de signal à une fonction de transfert mesurée (FR) du trajet de signal (60).

**11.** Dispositif (29) selon la revendication 10, le dispositif (29) étant agencé, de préférence programmé, pour exécuter un procédé (71) selon la revendication 8 ou 9.

12. Station de surveillance (27) pour traiter des données de trace (TD) générées par un réflectomètre de domaine temporel optique (47), lesdites données de trace (TD) décrivant un signal de réponse (RS) reçu par le réflectomètre (47) en provenance d'une fibre optique (19), la station de surveillance comprenant un dispositif (29) selon l'une des revendications 6, 7, 10 ou 11.

13. Produit de programme informatique, de préférence un support de stockage lisible par ordinateur (33), comprenant un programme informatique, le programme informatique étant programmé pour exécuter un procédé selon l'une des revendications 1 à 5, 8 ou 9 lorsqu'il est exécuté sur un ordinateur (29).

Fig. 1

**Fig. 2**

**Fig. 3**

71

78

FR ~ 73

FM ~ 75

| FM ~ 77

79

TD ----> ----> COT

**Fig. 4**

Fig. 5

Fig. 6

Fig. 7

TD

**Fig. 8**

CTD

**Fig. 9**

**EP 2 809 018 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2464034 A1